# EUROPÄISCHE PATENTSCHRIFT

(11) **EP 3 418 170 B1**
(45) Veröffentlichungstag und Bekanntmachung des Hinweises auf die Patenterteilung: **27.05.2026**
(21) Anmeldenummer: 18178754.0
(22) Anmeldetag: 20.06.2018
(51) Int. Cl.: B62J 99/00

(54) **ANZEIGEEINHEIT UND ELEKTROFAHRRAD**
DISPLAY UNIT AND ELECTRIC BICYCLE
UNITÉ D'AFFICHAGE ET BICYCLETTE ÉLECTRIQUE

(30) Priorität: 20.06.2017 DE 102017210265
(43) Veröffentlichungstag der Anmeldung: 26.12.2018
(73) Patentinhaber: Rotax Bike Technology AG, 4950 Huttwil (CH)
(72) Erfinder: Suter, Philipp, 6032 Emmen (CH); Ita, Janis, 3472 Wynigen (CH); Lanz, Simon, 4955 Gondiswil (CH); Afzal, Omar, 81379 München (DE); Durdevic, Ivica, 6146 Grossdietwil (CH); Woodtli, Robin, 4500 Solothurn (CH)
(74) Vertreter: Isarpatent

(56) Entgegenhaltungen:
- WO-A1-2017/032893
- WO-A2-2014/083024
- KR-A- 20120 138 556
- US-A- 4 480 809
- US-A1- 2001 040 204
- US-A1- 2004 220 712
- US-A1- 2006 053 954
- US-A1- 2013 168 274
- US-A1- 2013 206 633
- US-A1- 2016 119 516
- US-A1- 2016 144 920

## Beschreibung

Die vorliegende Erfindung betrifft eine Anzeigeeinheit gemäß dem Oberbegriff des Anspruchs 1 sowie ein Elektrofahrrad gemäß dem Oberbegriff des Anspruchs 10.

Elektrofahrräder, beispielsweise Pedelecs oder E-Bikes, erfreuen sich großer Beliebtheit. Für unterschiedliche Einsatzfelder sind besonders geeignete Fahrradtypen verfügbar. Hierzu gehören u.a. für den Freizeiteinsatz oder den Weg zur Arbeit auf der Straße oder im leichten Gelände optimierte Fahrräder (bspw. Citybikes oder Tourenbikes) und die für den Einsatz im Gelände und speziell auch bergigem Gelände entwickelten E-Mountainbikes (E-MTB) in verschiedenen Ausführungen. Elektrofahrräder bieten die Möglichkeit ohne Überbeanspruchung des Fahrers den Einsatzradius zu vergrößern und die durchschnittliche Fahrgeschwindigkeit zu erhöhen.

Aus dem Stand der Technik sind Elektrofahrräder bekannt, welche neben einer Antriebseinheit und einer Batterieeinheit auch eine Anzeigeeinheit aufweisen. Nachteilig bei derartigen Anzeigeeinheiten ist, dass deren Displayanordnungen lediglich in einer Montageposition montierbar sind. Die Anzeigeeinheiten sind daher nicht an unterschiedliche Fahrerwünsche anpassbar. Ein modulares Konzept mit an unterschiedliche Fahrradtypen montierbaren Anzeigeeinheiten ist daher nicht möglich, da jeweils geänderte Befestigungen erforderlich sind. Die Druckschrift US 2001/040204 A1 zeigt eine Anzeigeeinheit für ein Elektrofahrrad mit den Merkmalen des Oberbegriffs des Anspruchs 1.

Der Erfindung liegt daher die Aufgabe zugrunde, eine neuartige Anzeigeeinheit bereitzustellen, welche elektrisch unterstützte Mobilität mit den Ansprüchen sportlich und Lifestyle-orientierter Radfahrer in Übereinstimmung bringt.

Diese Aufgabe wird durch eine Anzeigeeinheit mit der Merkmalskombination des Anspruchs 1 sowie durch ein Elektrofahrrad gemäß dem Anspruch 10 gelöst.

Eine erfindungsgemäße Anzeigeeinheit für ein Elektrofahrrad ist mittels einer Halteanordnung an dem Lenker des Fahrrads befestigt. Erfindungsgemäß weist die Halteanordnung einen einzigen Haltearm und einen schwenkbar an dem Haltearm angeordneten Halterahmen zur Aufnahme einer Displayanordnung auf. Die Einbaulage der Displayanordnung und Position der Anzeigeeinheit zum Fahrer ist daher an unterschiedliche Fahrerwünsche anpassbar. Ein modulares Konzept mit an unterschiedliche Fahrradtypen montierbaren Anzeigeeinheiten ist aufgrund der Einstellbarkeit einfach möglich.

Vorzugsweise ist der Haltearm links vom Lenkervorbau montiert, so dass auf der rechten Seite ein Haltearm eines ebenfalls einarmigen Fahrradlicht montierbar ist. Alternativ kann das Fahrradlicht rechts und die Anzeigeeinheit links angeordnet sein. Dadurch wird eine kompakte Montage der Anzeigeeinheit erreicht.

Erfindungsgemäß, ist die Anzeigeeinheit mittels der Halteanordnung wahlweise in einer dem Fahrer näheren, bzw. weiter zugewandten, ersten Montageposition (sog. Kompakt-Position) und einer vom Fahrer weiter entfernten zweiten Montageposition (sog. Komfort-Position) montierbar. Die Anzeigeeinheit ist hierfür schwenkbar am Lenker befestigt. Vorzugsweise ist eine Klemmanordnnung zur Festlegung am Lenker vorgesehen. Die Wahl der Montageposition erfolgt durch Verschwenken. Die Anzeigeeinheit ist daher modular an unterschiedliche Fahrradtypen montierbar. Eine Anpassung an Fahrerwünsche ist ohne weitere Befestigungselemente möglich. Eine Anpassung an unterschiedliche Sitzhaltungen und Lenkerformen ist insbesondere möglich. Die erste Montageposition ermöglicht eine kompakte Fahrradgestaltung da die Gesamtlänge minimiert ist.

Gemäß einer vorteilhaften Ausführungsform der Erfindung ist die Anzeigeeinheit ferner wahlweise in einer geschützten Montageposition in Fahrtrichtung hinter dem Lenker neben dem Lenkervorbau angeordnet.

Der Haltearm ist vorzugsweise in zwei Einbauarten an dem Lenker derart montierbar, dass sich die Displayeinheit wahlweise vom Haltearm aus nach links oder rechts erstreckt. Hierzu wird der Haltearm vorzugsweise gedreht am Lenker montiert. Hierbei kann insbesondere die geschützte Montageposition erreicht werden.

Dem Fahrer steht dadurch insgesamt eine Anzeigeeinheit mit größtmöglicher Anpassungsfähigkeit zur Verfügung.

Erfindungsgemäß, umgreift der Halterahmen die Displayanordnung außenseitig. Erfindungsgemäß, ist der Rahmen die den Außenumfang der Displayanordnung komplett einfassen, so dass diese formschön aufgenommen und vom Rahmen an deren Außenflächen, Kanten und Ecken geschützt.

Erfindungsgemäß, ist die Displayanordnung wahlweise in einer ersten Montageposition oder in einer zweiten Montageposition innerhalb des Halterahmens montierbar, und ist die Displayanordnung in zwei unterschiedlichen, um 180 Grad versetzen Einbaulagen in den Halterahmen einsetzbar.

Die Displayanordnung hat vorzugsweise zumindest eine Anlageschulter für den Halterahmen. Die Displayanordnung wird vorzugsweise von unten in den Halterahmen eingeschoben, verschwenkt und anschließend mittels der etwa stufenförmigen Anlageschulter auf die Oberseite des Halterahmens aufgesetzt.

Der Halterahmen ist vorzugsweise etwa rechteckig ausgebildet. Die Eckbereich können hierbei jeweils mit Schrägflächen versehen und facettiert ausgebildet sein. Die dem Fahrer zugewandte Oberseite kann im Randbereich insbesondere facettiert mit Schrägflächen versehen sein.

Vorzugswiese weist der Halterahmen an zwei gegenüberliegenden Seiten, vorzugsweise den Querseiten, jeweils zumindest einen Befestigungsabschnitt zur Aufnahme eines die Displayeinheit fixierenden Befestigungselements auf. Als vorteilhaft hat es sich erwiesen, wenn an den Querseiten jeweils zwei Bohrungen zur Aufnahme von Schrauben vorgesehen sind.

Der Halterahmen hat bei einer Erfindungsvariante an zwei gegenüberliegenden Seiten, vorzugsweise den Querseiten, jeweils zumindest einen Anschlussbereich mit reduziertem Querschnitt, der den Zugang für einen Anschluss, insbesondere einen USB-Anschluss, freigibt. Vorzugsweise ist der Anschlussbereich als eine Aussparung für den USB ausgebildet.

Die Displayanordnung ist für die geschützte Montageposition vorzugsweise relativ zu einer Anordnung für die erste oder zweite Montageposition gedreht an dem Halterahmen montierbar.

Als besonders vorteilhaft hat es sich erwiesen, wenn der Haltearm einen ersten Befestigungsabschnitt zur Aufnahme eines Befestigungselements, mittels dem der Halterahmen verschwenkbar an dem Haltearm montierbar ist und einen zweiten Befestigungsabschnitt welcher den Lenker zumindest abschnittsweise umgreift und an diesem in beliebiger Drehlage montierbar ist, aufweist. Vorzugsweise ist der Haltearm gerade ausgeführt. Dadurch wird eine optisch ansprechende, kompakte Bauform erreicht.

Erfindungsgemäß, ist die Anzeigeeinheit wahlweise an einer ersten Seitenfläche oder einer zweiten Seitenfläche des Haltearms, welcher der ersten Seitenfläche gegenüberliegt, verschwenkbar montierbar. Dadurch kann die Anzeigeeinheit in zwei Montagepositionen, links oder rechts am Haltearm, relativ zur Vorbaulängsachse am Lenker des Fahrrads montiert werden.

Die Displayanordnung weist vorzugsweise ein hochformatig angeordnetes, etwa rechteckiges Gehäuse auf. Das Display der Displayanordnung ist vorzugsweise ebenfalls hochformatig angeordnet und etwa rechteckig. Das Display erstreckt sich vorzugsweise bis in den Randbereich des Gehäuses, wobei lediglich ein schmaler Rand vorgesehen ist. Dadurch sind eine bestmögliche Ausnutzung der Anzeigefläche und damit eine sehr gute Informationsmöglichkeit für den Fahrer gegeben.

Bei einer Ausführungsform der Anzeigeeinheit ist unterhalb des Displays etwa mittig ein dem Fahrer zugewandter Ein/Aus-Schalter vorgesehen. Der Schalter ist vorzugsweise breitformatig angeordnet und etwa rechteckig.

Vorzugsweise ist auf der dem Fahrer zugewandten Seite der Anzeigeeinheit zumindest ein elektrischer Anschluss, insbesondere ein USB-Anschluss, vorgesehen. Der Anschluss kann in einer Zugangsöffnung des Gehäuses angeordnet sein. Die Zugangsöffnung ist mittels einer Abdeckung verschließbar. Besonders bevorzugt wird eine Standard-USB-Buchse, so dass anders wie bei Mini-Anschlüssen kein Adapter notwendig ist.

Bei einem besonders bevorzugten Ausführungsbeispiel der Anzeigeeinheit sind die Leitungsanschlüsse, vorzugswiese alle Leitungsanschlüsse (Kabelausgänge), auf einer vom Fahrer abgewandten Seite vorgesehen.

Bei einer bevorzugten Ausführung der Displayeinheit sind die Anschlusskabel direkt mit der Displayeinheit, d. h. ohne Stecker, verbunden.

Alternativ sind die Leitungsanschlüsse als Anschlussbuchsen ausgebildet. Vorzugsweise sind alle Kabel steckbar, beispielsweise über HIGO-Stecker.

Die Leitungsanschlüsse sind vorzugsweise abgewinkelt derart angeordnet, dass sich diese gewinkelt schräg erstrecken. Dadurch sind die Leitungsanschlüsse gegenüber herkömmlichen, sich lediglich nach unten oder vorne erstreckenden Anschlüssen zur Steckermontage gut zugänglich und der zur Verfügung stehende Montageplatz wird bestmöglich ausgenutzt.

Ein erfindungsgemäßes Elektrofahrrad mit einer Anzeigeeinheit, wobei die Anzeigeeinheit nach wenigstens einem der Ansprüche 1-9 ausgebildet ist.

Die Erfindung kann universell bei allen Typen von Fahrrädern, insbesondere bei Mountainbikes (sowohl in Hardtail- oder Full-Suspension-Bauweise), aber auch bei anderen Fahrrädern, bspw**.** Straßenrad-Rahmen realisiert werden und somit letztlich ein Touren-, City- oder Cross-Rad oder andere moderne Fahrradtypen ergeben. Sie ermöglicht aufgrund der kompakten, formschönen Bauweise den Aufbau von Rädern, die weitgehend die Vorzüge eines klassischen Fahrrads und eines Elektrofahrrads in sich vereinen.

Weitere bevorzugte Ausführungsformen sind Gegenstand der Unteransprüche.

Im Folgenden wird eine bevorzugte Ausführungsform der vorliegenden Erfindung unter Bezugnahme auf die beiliegenden Zeichnungen näher erläutert. Dabei zeigen die Zeichnungen im Einzelnen:
Figur 1 eine perspektivische Darstellung eines erfindungsgemäßen Elektrofahrrads 1 im Bereich des Lenkervorbaus mit einer Anzeigeeinheit,
Figur 2 eine perspektivische Darstellung eines erfindungsgemäßen Elektrofahrrads 1 im Bereich des Lenkervorbaus mit einer Anzeigeeinheit in einer alternativen Montageposition,
Figur 3 eine perspektivische Darstellung eines erfindungsgemäßen Elektrofahrrads 1 im Bereich des Lenkervorbaus mit einer Anzeigeeinheit in einer weiteren Montageposition,
Figur 4 eine perspektivische Darstellung der Anzeigeeinheit mit Halteanordnung,
Figur 5 eine Draufsicht der Anzeigeeinheit mit Halteanordnung,
Figur 6 eine erste Seitenansicht der Anzeigeeinheit mit Halteanordnung,
Figur 7 eine zweite Seitenansicht der Anzeigeeinheit mit Halteanordnung,
Figur 8 eine perspektivische Darstellung der Halteanordnung vor dem Zusammenbau,
Figur 9 eine perspektivische Darstellung der Halteanordnung nach dem Zusammenbau,
Figur 10 eine Draufsicht der Halteanordnung,
Figur 11 eine Vorderansicht der Halteanordnung,
Figur 12 eine Seitenansicht der Displayanordnung,
Figur 13 eine Vorderansicht der Displayanordnung,
Figur 14 eine perspektivische Darstellung der Displayanordnung während dem Einsetzen in die Halteanordnung,
Figur 15 eine perspektivische Darstellung der Displayanordnung während dem Einsetzen in die Halteanordnung gemäß alternativer Vorgehensweise,
Figur 16 eine perspektivische Darstellung der Displayanordnung während der Fixierung in der Halteanordnung und
Figur 17 eine perspektivische Darstellung der Displayanordnung mit Halteanordnung.

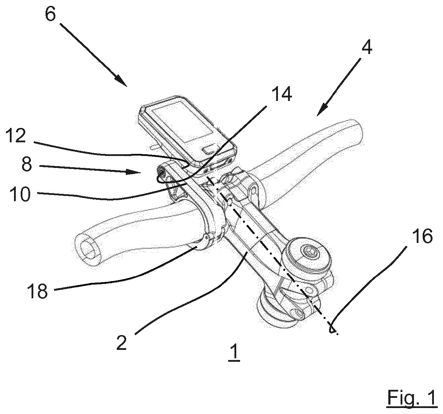

Figur 1 zeigt eine perspektivische Darstellung eines erfindungsgemäßen Elektrofahrrads 1 im Bereich eines an einem Lenkervorbau 2 angeordneten Fahrradlenkers 4. Eine Anzeigeeinheit 6 ist mittels einer Halteanordnung 8 an dem Lenker 4 des Fahrrads 1 befestigt. Die Halteanordnung 8 weist lediglich einen einzigen Haltearm 10 (Einarmbefestigung) mit einer ersten Seitenfläche 12 und einer dieser gegenüberliegenden zweiten Seitenfläche 14 auf. Die Anzeigeeinheit 6 ist im Bereich der ersten Seitenfläche 12 verschwenkbar angeordnet. Der Haltearm 10 ist in zwei Einbauarten an dem Lenker 4 montierbar. Hierzu kann der Haltearm 10 gedreht am Lenker montiert werden. Dadurch kann die Anzeigeeinheit 6 in zwei Montageposition relativ zur Vorbaulängsachse 16 am Lenker 4 des Fahrrads 1 montiert werden. Die Position der Anzeigeeinheit 6 ist daher an unterschiedliche Fahrerwünsche anpassbar. Ein modulares Konzept mit an unterschiedliche Fahrradtypen montierbaren Anzeigeeinheiten ist aufgrund der Einstellbarkeit einfach möglich.

Der Haltearm 10 ist gemäß Figur 1 links vom Lenkervorbau 2 am Lenker 4 montiert, so dass auf der rechten Seite ein Haltearm eines nicht dargestellten, ebenfalls einarmigen Fahrradlichts montierbar ist. Dadurch wird eine kompakte Montage der Anzeigeeinheit 6 erreicht.

Die Anzeigeeinheit 6 ist mittels der Halteanordnung 8 wahlweise in einer dem Fahrer näheren, bzw. weiter zugewandten, ersten Montageposition oder in der dargestellten vom Fahrer weiter entfernten zweiten Montageposition montierbar. Die Anzeigeeinheit 6 ist hierfür mittels dem Haltearm 10 schwenkbar am Lenker 4 befestigt. Hierzu ist eine Klemmanordnung 18 zur Festlegung am Lenker 4 vorgesehen. Die Wahl der Montageposition erfolgt durch Verschwenken des Haltearms 10. Die Anzeigeeinheit ist daher modular an unterschiedliche Fahrradtypen montierbar. Eine Anpassung an Fahrerwünsche ist vorteilhaft möglich.

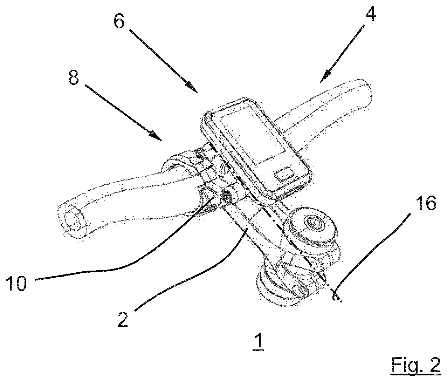

Gemäß Figur 2, welche eine perspektivische Darstellung des Elektrofahrrads 1 aus Figur 1 mit einer alternativen Montageposition der Anzeigeeinheit 6 zeigt, ist die Anzeigeeinheit 6 mittels der Halteanordnung 8 ferner in einer dem Fahrer näheren, bzw. weiter zugewandten Montageposition oberhalb des Lenkervorbaus 2 montierbar.

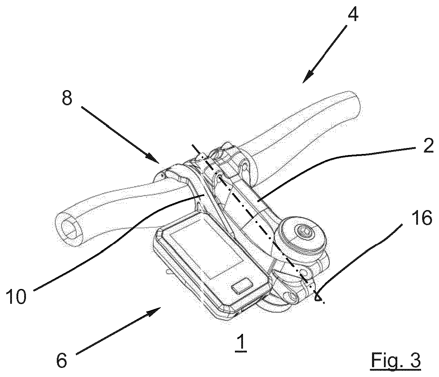

Gemäß Figur 3, welche eine perspektivische Darstellung des Elektrofahrrads 1 aus Figur 1 mit einer weiteren alternativen Montageposition der Anzeigeeinheit 6 zeigt, ist die Anzeigeeinheit 6 ferner wahlweise in einer geschützten Montageposition in Fahrtrichtung hinter dem Lenker 4 neben dem Lenkervorbau 2 angeordnet. Hierzu ist der Haltearm 10 gedreht am Lenker 4 montiert.

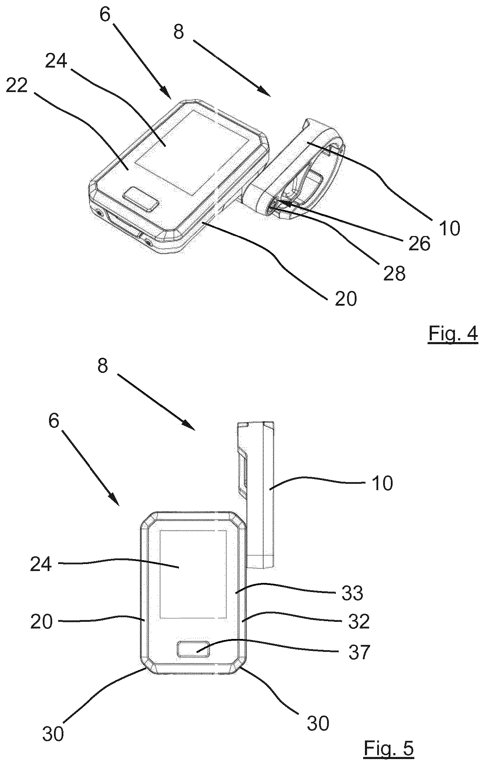

In Figur 4 ist eine perspektivische Detaildarstellung der Anzeigeeinheit 6 und in Figur 5 eine Draufsicht von oben gezeigt. Die Halteanordnung 8 weist einen schwenkbar an dem Haltearm 10 angeordneten Halterahmen 20 als Displayaufnahme zur Aufnahme einer Displayanordnung 22 mit Display 24 auf. Hierzu ist ein Schwenkgelenk 26 mittels eines Befestigungselements 28 (Befestigungsschraube) ausgebildet. Der Haltearm 10 ist gerade ausgeführt. Dem Fahrer steht dadurch eine Anzeigeeinheit mit größtmöglicher Anpassungsfähigkeit zur Verfügung.

Der Halterahmen 20 umgreift die Displayanordnung 22 außenseitig. Hierbei umfasst der Rahmen 20 den Außenumfang der Displayanordnung 22 komplett, so dass diese formschön aufgenommen und vom Rahmen 20 an deren Außenflächen, Kanten und Ecken geschützt ist. Der Halterahmen ist vorzugsweise etwa rechteckig ausgebildet. Die vier Eckbereiche sind hierbei jeweils mit Schrägflächen 30 versehen und facettiert ausgebildet. Die Übergänge sind mit Radien versehen. Die dem Fahrer zugewandte Oberseite ist im Randbereich umlaufend facettiert mit einer Schrägfläche 32 versehen.

Die Displayanordnung 22 weist ein hochformatig angeordnetes, etwa rechteckiges Gehäuse 33 auf. Das Display 24 der Displayanordnung ist ebenfalls hochformatig angeordnet und etwa rechteckig. Das Display 24 erstreckt sich bis in den Randbereich des Gehäuses 33, wobei lediglich ein schmaler Rand vorgesehen ist. Dadurch sind eine bestmögliche Ausnutzung der Anzeigefläche und damit eine sehr gute Informationsmöglichkeit für den Fahrer gegeben.

Unterhalb des Displays 24 ist etwa mittig ein dem Fahrer zugewandter Ein/Aus-Schalter 37 vorgesehen. Der Schalter 37 ist breitformatig angeordnet und etwa rechteckig.

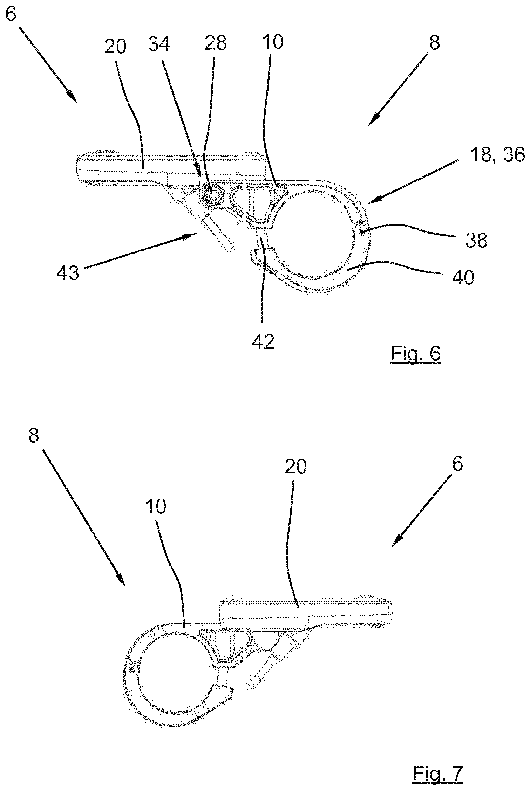

Gemäß den Figuren 6 und 7, welche die beiden Seitenansichten der Anzeigeeinheit 6 zeigt, hat der Haltearm 10 einen ersten Befestigungsabschnitt 34 zur Aufnahme des Befestigungselement 28, mittels dem der Halterahmen 20 verschwenkbar an dem Haltearm 10 montierbar ist und einen zweiten Befestigungsabschnitt 36 mit Klemmanordnung 18 welcher den Lenker 4 im montierten Zustand abschnittsweise umgreift und an diesem in beliebiger Drehlage montierbar ist. Dadurch wird eine optisch ansprechende, kompakte Bauform erreicht.

Die Klemmanordnung 18 weist einen über ein Drehgelenk 38 verschwenkbar mit einem ersten etwa halbrunden Bereich des Haltearms 10 verbundenen halbrunden Klemmschenkel 40 auf. Die Klemmspannung wird mittels einer Klemmschraube 42 aufgebracht.

Anschlussleitungen 43 sind auf einer vom Fahrer abgewandten Seite vorgesehen. Die Anschlussleitungen 43 sind abgewinkelt derart angeordnet, dass sich diese gewinkelt schräg vom Fahrer weg erstrecken. Dadurch sind die Leitungsanschlüsse gegenüber herkömmlichen, sich lediglich nach unten oder vorne erstreckenden Anschlüssen zur Steckermontage gut zugänglich und der zur Verfügung stehende Montageplatz wird bestmöglich ausgenutzt.

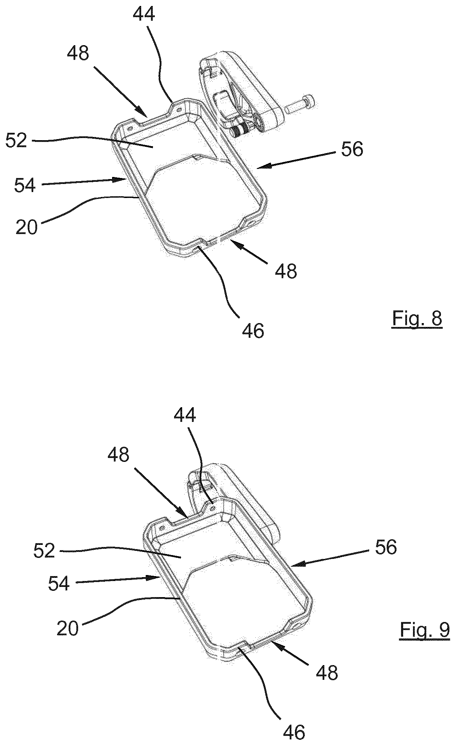

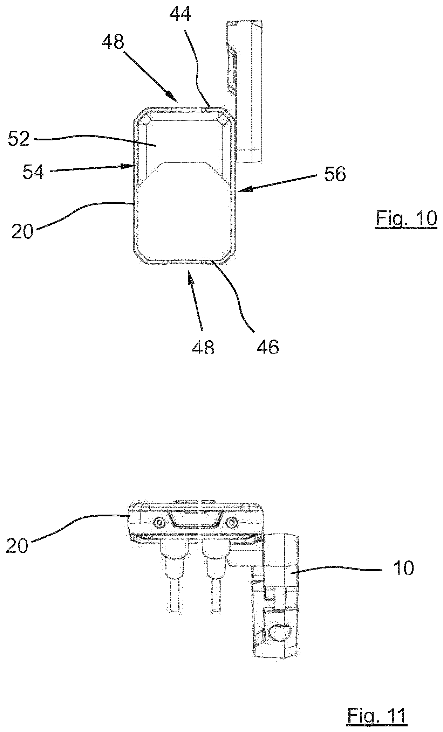

Wie in den Figuren 8 bis 11 dargestellt, hat der Halterahmen 20 an zwei gegenüberliegenden Querseiten 44, 46, jeweils einen Anschlussbereich 48, 50 mit reduziertem Querschnitt (Aussparung), der den Zugang für einen Anschluss, insbesondere einen USB-Anschluss, des nicht dargestellten Displays freigibt. Die Displayanordnung ist wahlweise in einer ersten Montageposition oder in einer zweiten Montageposition innerhalb des Halterahmens montierbar. Das heißt, die Displayanordnung ist in zwei unterschiedlichen, um 180 Grad versetzen Einbaulagen in den Halterahmen einsetzbar. Die Displayanordnung ist für die geschützte Montageposition vorzugsweise relativ zu einer Anordnung für die erste oder zweite Montageposition gedreht an dem Halterahmen montierbar. Als Auflage für das Display ist ein Auflageteil 52 mit Auflagefläche vorgesehen, welche abschnittsweise Längsseiten 54, 56 des Halterahmens 20 und die Querseite 44 verbindet.

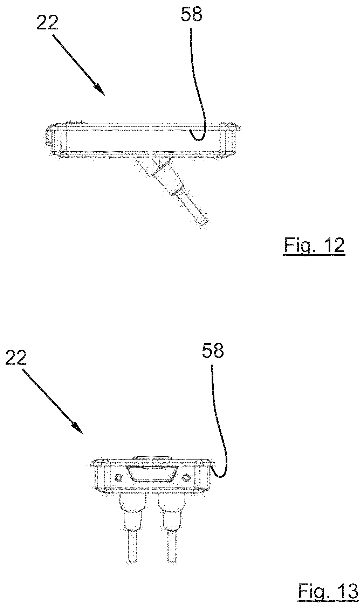

Wie insbesondere den Figuren 12 und 13 zu entnehmen ist, welche Einzeldarstellungen der Displayanordnung 22 ohne Halterahmen 20 zeigen, weist die Displayanordnung 22 eine umlaufende Anlageschulter 58 zur Auflage auf den Halterahmen 20 auf.

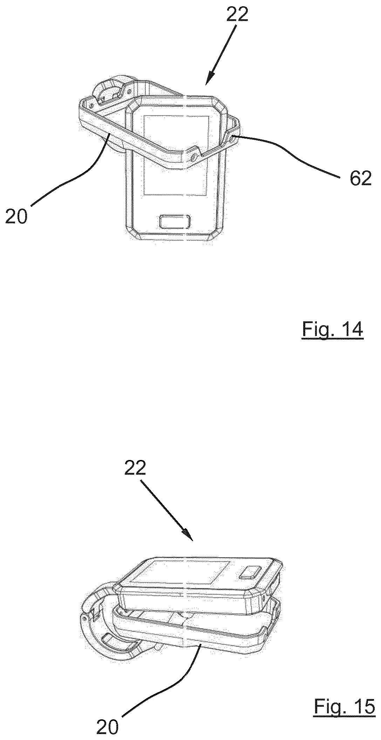

Gemäß Figur 14 wird die Displayanordnung 22 vorzugsweise von unten mit bereits montierten Anschlusskabeln in den Halterahmen eingeschoben, verschwenkt und anschließend mittels der etwa stufenförmigen Anlageschulter 58 auf die Oberseite des Halterahmens 20 aufgesetzt.

Alternativ wird die Displayanordnung 22 wie in Figur 15 dargestellt ohne Anschlusskabel von oben in den Halterahmen 20 eingesetzt.

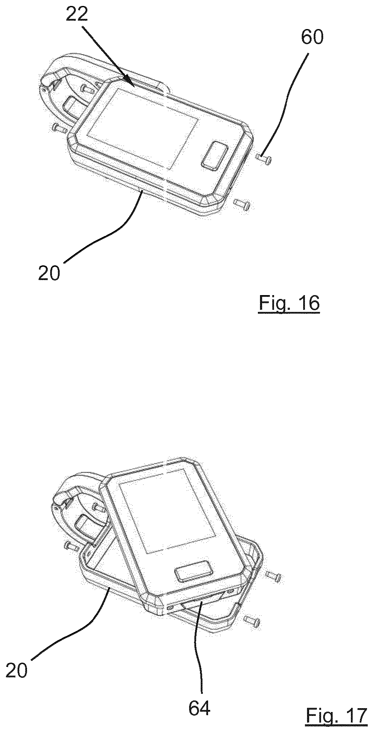

Gemäß Figur 16 wird die Displayanordnung 22 anschließend an zwei gegenüberliegenden Querseiten mit jeweils zwei Fixierschrauben 60 (kurz vor dem Einschrauben schematisch dargestellt) festgelegt. Hierzu sind an den Querseiten des Halterahmens 20 jeweils zwei Bohrungen 62 zur Aufnahme der Schrauben 60 vorgesehen (siehe Figur 14).

Wie in Figur 17 dargestellt, ist auf der dem Fahrer zugewandten Seite der Displayanordnung 22 ein USB-Anschluss 64 vorgesehen. Der Anschluss 64 ist in einer Zugangsöffnung des Gehäuses angeordnet. Die Zugangsöffnung ist mittels einer Abdeckung verschließbar.

Die Ausführung der Erfindung ist nicht auf die in den Figuren gezeigten und oben erläuterten Beispiele beschränkt, sondern ebenso in einer Vielzahl von Abwandlungen eines Fachmanns möglich.

Offenbart ist eine Anzeigeeinheit 6 für ein Elektrofahrrad 1, wobei die Anzeigeeinheit 6 mittels einer Halteanordnung 8 an dem Lenker 4 des Fahrrads 1 befestigt ist. Erfindungsgemäß weist die Halteanordnung 8 einen einzigen Haltearm 10 und einen schwenkbar an dem Haltearm 10 angeordneten Halterahmen 20 zur Aufnahme einer Displayanordnung 22 auf. Offenbart ist ferner ein Elektrofahrrad 1 mit einer derartigen Anzeigeeinheit 6.

### Bezugszeichenliste

- 1: Elektrofahrrad
- 2: Lenkervorbau
- 4: Fahrradlenker
- 6: Anzeigeeinheit
- 8: Halteanordnung
- 10: Haltearm
- 12: erste Seitenfläche
- 14: zweite Seitenfläche
- 16: Vorbaulängsachse
- 18: Klemmanordnung
- 20: Halterahmen
- 22: Displayanordnung
- 24: Display
- 26: Schwenkgelenk
- 28: Befestigungselement
- 30: Schrägfläche
- 32: Schrägfläche
- 33: Gehäuse
- 34: erster Befestigungsabschnitt
- 36: zweiter Befestigungsabschnitt
- 37: Ein/Aus-Schalter
- 38: Drehgelenk
- 40: Klemmschenkel
- 42: Klemmschraube
- 43: Anschlussleitung
- 44: Querseite
- 46: Querseite
- 48: Anschlussbereich
- 50: Anschlussbereich
- 52: Auflageteil
- 54: Längsseite
- 56: Längsseite
- 58: Anlageschulter
- 60: Fixierschraube
- 62: Bohrung
- 64: USB-Anschluss

## Patentansprüche

1. Anzeigeeinheit (6) für ein Elektrofahrrad (1), wobei die Anzeigeeinheit (6) eine Displayanordnung (22) und eine Halteanordnung (8) aufweist, mittels welcher die Anzeigeeinheit (6) an dem Lenker (4) des Fahrrads (1) befestigt ist, wobei die Halteanordnung (8) einen einzigen Haltearm (10) und einen schwenkbar an dem Haltearm (10) angeordneten Halterahmen (20) zur Aufnahme der Displayanordnung (22) aufweist, wobei der Halterahmen (20) den Außenumfang der Displayanordnung (22) komplett einfasst, und die Anzeigeeinheit (6) wahlweise in einer dem Fahrer näheren ersten Montageposition oder einer vom Fahrer weiter entfernten zweiten Montageposition montierbar ist, **dadurch gekennzeichnet, dass**
die Displayanordnung (22) wahlweise in einer ersten Montageposition oder in einer um 180 Grad versetzen zweiten Montageposition in den Halterahmen (20) einsetzbar ist und der Halterahmen (20) die Displayanordnung (22) außenseitig umgreift und an einer Seitenfläche des Haltearms (10) verschwenkbar montiert ist.

2. Anzeigeeinheit nach Anspruch 1, wobei die Anzeigeeinheit (6) wahlweise in einer geschützten Montageposition in Fahrtrichtung hinter dem Lenker (4) neben dem Lenkervorbau (4) anordenbar ist.

3. Anzeigeeinheit nach Anspruch 1 oder 2, wobei die Displayanordnung (22) zumindest eine Anlageschulter (58) zur Auflage auf den Halterahmen (20) aufweist.

4. Anzeigeeinheit nach einem der vorhergehenden Ansprüche, wobei der Halterahmen (20) etwa rechteckig ausgebildet ist.

5. Anzeigeeinheit nach einem der vorhergehenden Ansprüche, wobei der Halterahmen (20) an zwei gegenüberliegenden Seiten, vorzugsweise den Querseiten (44, 46), jeweils zumindest einen Befestigungsabschnitt zur Aufnahme mindestens eines die Displayanordnung (22) fixierenden Befestigungselements (60) aufweist.

6. Anzeigeeinheit nach einem der vorhergehenden Ansprüche, wobei der Halterahmen (20) an zwei gegenüberliegenden Seiten, vorzugsweise den Querseiten (44, 46), jeweils zumindest einen Anschlussbereich mit reduziertem Querschnitt aufweist, der den Zugang für einen Anschluss freigibt.

7. Anzeigeeinheit nach einem der vorhergehenden Ansprüche, wobei die Displayanordnung (22) von unten in den Halterahmen (20) einführbar ist.

8. Anzeigeeinheit nach einem der vorhergehenden Ansprüche, wobei die Displayanordnung (22) für die geschützte Montageposition relativ zu einer Anordnung für die erste oder zweite Montageposition gedreht an dem Halterahmen (20) montierbar ist.

9. Anzeigeeinheit nach einem der vorhergehenden Ansprüche, wobei der Haltearm (10) einen ersten Befestigungsabschnitt (34) zur Aufnahme eines Befestigungselements (28), mittels dem der Halterahmen (20) verschwenkbar an dem Haltearm (10) montierbar ist und einen zweiten Befestigungsabschnitt (36) welcher den Lenker (4) zumindest abschnittsweise umgreift und an diesem in beliebiger Drehlage montierbar ist, aufweist.

10. Elektrofahrrad mit einer Anzeigeeinheit (6), wobei die Anzeigeeinheit (6) nach wenigstens einem der vorhergehenden Ansprüche ausgebildet ist.

## Claims

1. Display unit (6) for an electric bicycle (1), wherein the display unit (6) comprises a display arrangement (22) and a holding arrangement (8), by means of which the display unit (6) is fastened to the handlebar (4) of the bicycle (1), wherein the holding arrangement (8) comprises a single holding arm (10) and a holding frame (20), which is arranged pivotably on the holding arm (10), for receiving the display arrangement (22), wherein the holding frame (20) completely surrounds the outer circumference of the display arrangement (22), and the display unit (6) can be mounted selectively in a first mounting position closer to the rider or in a second mounting position further away from the rider, **characterised in that** the display arrangement (22) can be inserted into the holding frame (20) selectively in a first mounting position or in a second mounting position offset by 180 degrees, and the holding frame (20) engages around the display arrangement (22) on the outside and is mounted pivotably on a side surface of the holding arm (10).

2. Display unit according to claim 1, wherein the display unit (6) can selectively be arranged in a protected mounting position behind the handlebar (4) adjacent to the handlebar stem (4) in the direction of travel.

3. Display unit according to claim 1 or 2, wherein the display arrangement (22) comprises at least one bearing shoulder (58) for bearing on the holding frame (20).

4. Display unit according to one of the preceding claims, wherein the holding frame (20) is configured so as to be approximately rectangular.

5. Display unit according to one of the preceding claims, wherein the holding frame (20) comprises, on two opposite sides, preferably the transverse sides (44, 46), at least one fastening section for receiving at least one fastening element (60) that fixes the display arrangement (22).

6. Display unit according to one of the preceding claims, wherein the holding frame (20) comprises, on two opposite sides, preferably the transverse sides (44, 46), in each case at least one connection region having a reduced cross section, which opens up the access for a connection.

7. Display unit according to one of the preceding claims, wherein the display arrangement (22) can be inserted into the holding frame (20) from below.

8. Display unit according to one of the preceding claims, wherein the display arrangement (22) for the protected mounting position can be mounted on the holding frame (20) in such a manner as to be able to rotate relative to an arrangement for the first or second mounting position.

9. Display unit according to one of the preceding claims, wherein the holding arm (10) comprises a first fastening section (34) for receiving a fastening element (28), by means of which the holding frame (20) can be mounted pivotably on the holding arm (10), and a second fastening section (36) which engages around the handlebar (4) at least in sections and can be mounted on it in any rotational position.

10. Electric bicycle having a display unit (6), wherein the display unit (6) is configured according to at least one of the preceding claims.

## Revendications

1. Unité d'affichage (6) pour une bicyclette électrique (1), dans laquelle l'unité d'affichage (6) comprend un ensemble écran (22) et un ensemble support (8) au moyen duquel l'unité d'affichage (6) est fixée sur le guidon (4) de la bicyclette (1), dans laquelle l'ensemble support (8) comprend un seul bras de support (10) et un cadre de support (20) agencé de façon pivotable sur le bras de support (10) pour recevoir l'ensemble écran (22), dans laquelle le cadre de support (20) entoure entièrement le pourtour extérieur de l'ensemble écran (22), et l'unité d'affichage (6) peut être montée sélectivement dans une première position de montage plus proche du cycliste ou dans une seconde position de montage plus éloignée du cycliste,
**caractérisée en ce que** l'ensemble écran (22) peut être utilisé sélectivement dans une première position de montage ou dans une seconde position de montage décalée de 180 degrés dans le cadre de support (20), et le cadre de support (20) entoure l'ensemble écran (22) côté extérieur et est monté de façon à pouvoir pivoter sur une surface latérale du bras de support (10).

2. Unité d'affichage selon la revendication 1, dans laquelle l'unité d'affichage (6) peut être agencée sélectivement dans une position de montage protégée, située derrière le guidon (4) à côté de la potence de guidon (4) dans une direction de déplacement.

3. Unité d'affichage selon la revendication 1 ou 2, dans laquelle l'ensemble écran (22) comprend au moins un épaulement d'appui (58) pour venir en appui sur le cadre de support (20).

4. Unité d'affichage selon l'une des revendications précédentes, dans laquelle le cadre de support (20) est configuré de manière sensiblement rectangulaire.

5. Unité d'affichage selon l'une des revendications précédentes, dans laquelle le cadre de support (20) comprend, sur deux côtés mutuellement opposés, de préférence des côtés latéraux (44, 46), respectivement au moins une partie de fixation pour recevoir au moins un élément de fixation (60) fixant l'ensemble écran (22).

6. Unité d'affichage selon l'une des revendications précédentes, dans laquelle le cadre de support (20) comprend, sur deux côtés mutuellement opposés, de préférence les côtés latéraux (44, 46), respectivement au moins une zone de connexion ayant une section transversale réduite, qui libère l'accès à une connexion.

7. Unité d'affichage selon l'une des revendications précédentes, dans laquelle l'ensemble écran (22) peut être introduit dans le cadre de support (20) par le bas.

8. Unité d'affichage selon l'une des revendications précédentes, dans laquelle l'ensemble écran (22) peut être monté sur le cadre de support (20) pour la position de montage protégée en étant tourné par rapport à un agencement pour la première ou seconde position de montage.

9. Unité d'affichage selon l'une des revendications précédentes, dans laquelle le bras de support (10) comprend une première partie de fixation (34) pour recevoir un élément de fixation (28) au moyen duquel le cadre de support (20) peut être monté de façon pivotable sur le bras de support (10), et une seconde partie de fixation (36) qui entoure au moins partiellement le guidon (4) et peut être montée sur celui-ci dans une position de rotation quelconque.

10. Bicyclette électrique équipée d'une unité d'affichage (6), dans laquelle l'unité d'affichage (6) est configurée selon au moins l'une des revendications précédentes.
